# EUROPÄISCHE PATENTSCHRIFT

(11) **EP 3 468 772 B1**
(45) Veröffentlichungstag und Bekanntmachung des Hinweises auf die Patenterteilung: **16.09.2020**
(21) Anmeldenummer: 16731825.2
(22) Anmeldetag: 13.06.2016
(51) Int. Cl.: B29C 55/08, B29C 31/08

(54) **BASISSTRUKTUR, VORRICHTUNG UND VERFAHREN ZUM TRANSPORT VON FOLIE**
BASIC STRUCTURE, DEVICE AND METHOD FOR TRANSPORTING FILMS
STRUCTURE DE BASE, DISPOSITIF ET PROCÉDÉ POUR TRANSPORTER UNE FEUILLE

(43) Veröffentlichungstag der Anmeldung: 17.04.2019
(73) Patentinhaber: Globra GmbH, 5020 Salzburg (AT)
(72) Erfinder: PINEGGER, Wolfgang, 8971 Schladming-Rohrmoos (AT)
(74) Vertreter: 2s-ip Schramm Schneider Bertagnoll Patent- und Rechtsanwälte Part mbB
(86) Internationale Anmeldenummer: PCT/EP2016/063514
(87) Internationale Veröffentlichungsnummer: WO 2017/215731

(56) Entgegenhaltungen:
- WO-A1-2010/046738
- WO-A1-2014/208016
- DE-A1- 2 360 335

## Beschreibung

Die vorliegende Erfindung betrifft eine Basisstruktur, eine Vorrichtung und ein Verfahren zum Transport von Folie. Derartige Basisstrukturen, Vorrichtungen und Verfahren werden eingesetzt bei der Herstellung von Folien, insbesondere Endlosfolien, aus Kunststoff, die verstreckt werden.

Die Herstellung solcher Endlosfolien erfolgt üblicherweise, indem aufgeschmolzenes Kunststoffgranulat (die sogenannte Schmelze) auf einen sich bewegenden Kühlkörper aufgebracht wird, wo es unter Kühlung einen Folienfilm bildet und von dem sich bewegenden Kühlkörper mitgenommen wird. Die abgekühlte Folie wird dann von dem Kühlkörper separiert. Diese abgekühlte Folie wird auch als der "cast film" bezeichnet. Hierauf folgen die Phasen des Wiederaufheizens der so entstandenen Folie und des Verstreckens der Folie, und zwar z.B. in Folien-Transportrichtung (Machine Direction, MD), quer zur Transportrichtung (Transverse Direction, TD), und schließlich Thermofixierung (Heat Setting), Abkühlen, Randbeschneiden, weitere Behandlungen und Aufwickeln der Folie z.B. auf eine Rolle.

Im Folgenden wird unter dem Begriff der Folie oder des Folienfilms der "cast film" verstanden, also die (Endlos-)Folie, wie sie sich nach Herunterkühlung und Separierung von dem Kühlkörper präsentiert. Diese Endlosfolie kann - muss aber nicht - bereits verstreckt worden sein.

Bei den Folien kann es sich um alle Typen handeln, die durch Aufbringen eines Materials aus einer Schmelze per Extrusion z.B. mittels Flachdüse in einer oder mehreren Lagen auf die Oberfläche einer rotierenden Kühlwalze und die dadurch bedingte anschließende Abkühlung hergestellt werden können. Das betrifft auch Folien, welche gleichzeitig auf der kühlwalzenabgewandten Seite mittels Luft, Wasser oder durch weitere Walzen oder in anderer Weise abgekühlt werden können. Das betrifft jedenfalls aber nicht ausschließlich alle polyolefinen Kunststoffe wie Polypropylen (PP) und Polyethylen (PE), Polyester (z.B. PET), Polyamid, Polyactide (PLA), Polystyrene, Polykarbonate, und alle, die unter die Definition von oben fallen.

Im Folgenden werden die Begriffe "recken", "strecken", "verstrecken" und davon abgeleitete Begriffe synonym zueinander verwendet.

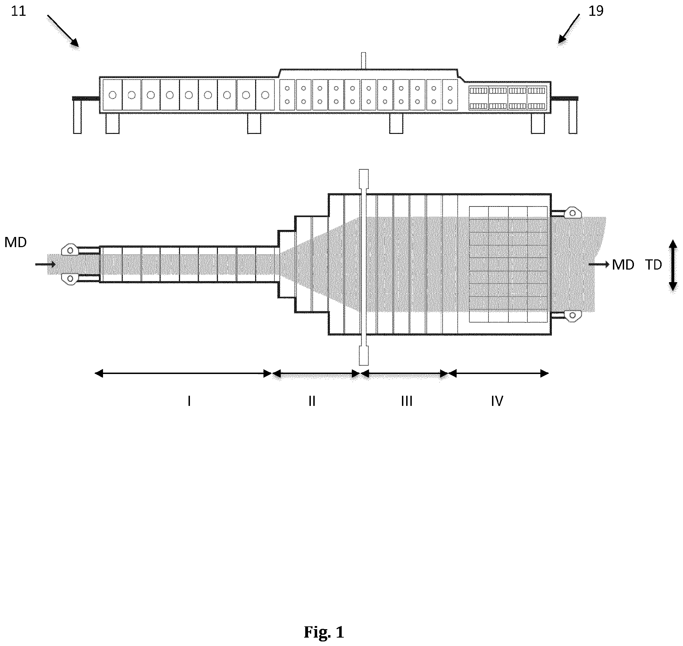

Fig. 1 zeigt eine typische Anlage (bzw. ein Anlagenteil) zur Aufheizung von zu verstreckender Polypropylen-Folie (Bereich I) für die anschließende TD-Streckung (Bereich II) sowie Annealing (Bereich III) und Abkühlung (Bereich IV), obere Abbildung in Seitenansicht, untere Abbildung in der Sicht von oben. Die Einteilung in die vier Bereiche gilt auch bei Einsatz der erfindungsgemäßen Folientransportvorrichtung. Im Folgenden werden die Bereiche I und II näher betrachtet.

Bei bekannten Folientransportvorrichtungen wird die Folie am Einlauf 11 der Anlage in einem Kettenschienensystem seitlich mit Kluppen eingekluppt und durch die Aufheizzone (Bereich I) transportiert. In der Streckzone (Bereich II) verändern die Kluppen einer jeden Seite ihre Richtung und laufen nach außen, wodurch die Folie in quer zur Transportrichtung verstreckt wird. In der Annealing- und in der Kühlzone kann das System ebenfalls seine Richtung ändern oder auch nur zum Transport der Folie verwendet werden. Am Auslauf 19 der Anlage wird die Folie wieder ausgekluppt.

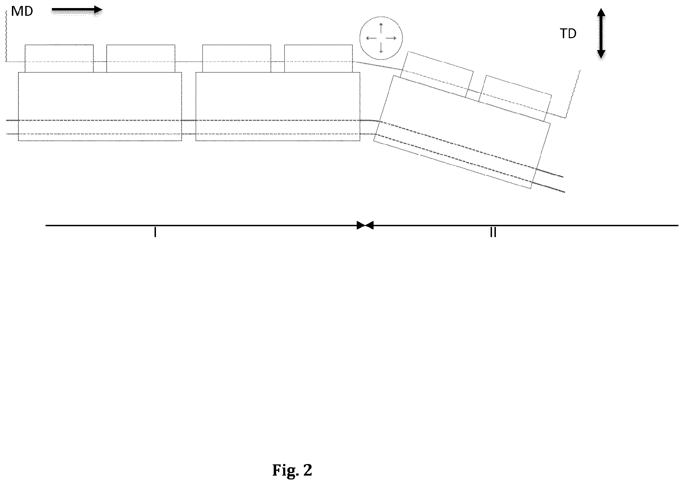

Diese Anlage hat eine integrierte Heizung mit heißer Luft. Den Übergang zwischen der Aufheizzone (Bereich I) und der Streckzone (Bereich II) zeigt Fig. 2 für die rechte Seite (in MD gesehen) des Kettenschienensystems.

Man unterscheidet zwischen Kettenschienensystem mit Kluppen, welche gleiten (Gleitkette), und solchen, die mit Rollenlagern bewegt werden (Rollenkette). Gleitketten arbeiten mit Gleitelementen, welche die Kluppen auf der Schiene führen. Die Gleitelemente sind aus Kunststoff und müssen geschmiert werden, was teuer ist und Verunreinigungen schafft. Diese Systeme sind bei bestimmten Folien wie PET-Folien nicht anwendbar.

Rollenketten arbeiten mit 7-9 Rollenlagern, also Rollen mit Kugellagern pro Kluppe. Sie arbeiten im Wesentlichen mit viel weniger Schmierstoffen, sind teurer, und es kommt durch die hohe Zahl von Lagern (viele tausend) leicht zu mechanischen Problemen; wenn nur eines dieser Lager bricht, kann das gesamte System zerstört oder zumindest lahmgelegt werden.

Im der Vorheizzone (Bereich I), der Annealingzone (Bereich III) und der Abkühlzone (Bereich IV) gibt es keine oder nur sehr geringe Lateralkräfte. Die sehr dünne und sehr leichte Folie wird lediglich beidseitig gehalten.

In der Reckzone (Bereich II) kommen Lateralkräfte hinzu aus der Querverstreckung der Folie. Die Folie ist dort aber sehr aufgeheizt und wird im Verlauf der Reckzone dünner. Die notwendigen Lateralkräfte für das Verstrecken der Folie und die Kräfte und die Energie der massiven Kettenschienensysteme stehen in keinem vernünftigen Verhältnis zueinander.

Mangels anderweitiger Lösungen verwendet man im Stand der Technik mit diesen Kettenschienensystemen mit Kluppen eine massive Technologie für die Verarbeitung im Verhältnis dazu sehr geringer Kräfte.

So kommen im Durchschnitt auf 1 Meter Kettenlänge ca. 8 Kluppen auf jeder Seite und noch einmal so viele im Rücklauf. Die Folienbreite bei einer 8,7 Meter-Anlage am TDO-Einlauf beträgt ca. 1,2 Meter. Die Foliendicke beträgt hier ca. 140 µm für eine Filmdicke von 20 µm am Ende der Reckzone.

Die Folie, die hier auf einem Meter auf beiden Seiten eingekluppt wird hat, eine Fläche von 1,2 m² und wiegt nur wenige hundert Gramm. Das bleibt während der gesamten Verstreckphase gleich; sie wird breiter aber gleichzeitig dünner.

Dafür verwendet man Systeme, die viele Tonnen wiegen, selbst sehr hohen Reibungs- und Zugkräften mit entsprechender Wärmeentwicklung ausgesetzt sind, aber bis zu 80 % des Durchlaufes nur wenige hundert Gramm an Folie halten müssen und in der Streckzone im Verhältnis nur geringen Lateralkräften ausgesetzt sind.

Das System war in Ordnung, solange die Maschinen langsam und die Vorheizzone sowie die Annealing- und Kühlzonen im Vergleich zur Reckzone relativ kurz waren. Nun ist bei schneller laufenden Maschinen die Reckzone im Verhältnis zu den anderen Zonen kurz und das System in sich viel zu komplex und fehleranfällig, zu schwer, erzeugt enorme Zugkräfte, Reibung, Hitze etc. und zwar nur, um wenige Kilogramm Folie an beiden Seiten festzuhalten.

Gleitsysteme verwenden, wie oben dargelegt, tausende Gleitelemente, welche geschmiert werden müssen. Dafür kann man nur sehr teure Spezialöle verwenden speziell wegen der Hitze, und Öl in solchen Systemen ist immer schlecht, es darf nicht mit der Folie in Berührung kommen, da es diese verunreinigt oder zu Filmrissen führt.

Diese Schmiersysteme sind nicht nur teuer sondern auch extrem kompliziert und fehleranfällig.

Rollensysteme haben bis zu 25.000 Rollenlager in einer Maschine. Diese bergen eine große Gefahr für den Fall, dass auch nur eines davon stecken bleibt und bricht. Da sie aus sehr hartem Stahl bestehen, kann das zu einem Totalausfall des ganzen Systems führen. Daher werden die Lager in Rollenketten in Zyklen von ca. 2 Jahren präventiv ausgetauscht, was enorm teuer ist.

Die Zugkräfte auf den Ketten sind aufgrund ihres eigenen Gewichtes und Systems (nicht wegen der Folie) mittlerweile so groß, dass es zu einer Längung der Kette kommt und die geschmierten Kettenbolzen sehr rasch verschleißen. Das Schmieren der Kettenbolzen ist enorm aufwendig und wiederum fehleranfällig. Lebensdauergeschmierte Kettenbolzen haben sich nicht bewährt. Damit kommt es zu Kettenproblemen bis hin zu Kettenrissen. Die damit verbundene Reibungsenergie erzeugt Wärme und bedarf aufwendiger Kühlsysteme der Schienen.

Letztlich werden diese sehr teuren und komplizierten Kettenschienensysteme nur dazu verwendet, Folie einzukluppen und während eines Vorheiz-, Querstreck-, Annealing und Abkühlprozesses sehr schnell durch einen sehr langen Ofen zu führen.

Die geschilderten mechanischen Probleme führen auch zu verfahrenstechnischen Problemen. Die massiven Stahlkluppen befinden sich mit ihren Greifelementen in der sehr heißen Zone des Ofens und heizen sich entsprechend auf. Je länger die Maschine, desto länger wird die Vorheizzone. Damit sind die Kluppen über längere Strecken in heißen Bereichen und je schneller die Maschine desto schneller kommen sie vom Auslauf zum Einlauf zurück. Die massiven Stahlkluppen so rasch zu Kühlen wird immer schwieriger, sie speichern einfach die Hitze zu gut. Es werden daher immer komplexere Systeme zur Kluppenkühlung verwendet, die verhindern sollen, dass die Greifelemente, wenn sie die neue Folie am Einlauf aufnehmen, so heiß sind, dass sie den Film bereits teilweise schmelzen, was zu Filmrissen führt.

Zudem gibt es ein Problem mit den Kluppenhämmern bei unterschiedlichen Foliendicken. Heutige Anlagen sind ausgelegt für Folien-Enddicken von 10 bis 80 µm, manchmal bei "cavitated films" bis 200 µm. Die Kluppen schließen aber immer gleich und sind auf die dünnste Folie eingestellt. Damit kann es passieren, dass bei dicken Folien und sehr heißen Kluppen sich die Kluppenhämmer tief in die Folie "eingraben" und das so auch an den Rändern am Beginn der Streckzone wie unten beschrieben zu Filmrissen führt.

Bei hohen Geschwindigkeiten tritt ein weiteres Problem auf dort, wo das Kluppensystem vom geraden Transportbereich I in den Streckbereich II übergeht. Da die Kettenschiene und damit der Lauf der Kluppen ihre Richtung ändert und auseinander läuft, um die Folie zu verstrecken, findet zwischen den Kluppenhämmern zweier Kluppen neben der damit beginnenden Querverstreckung auch eine unerwünschte Längsverstreckung, also eine so genannte ungeplante Simultanverstreckung statt, vgl. Fig. 2. Das in einem Bereich, in dem die Folie von teilweise zu heißen Kluppen festgehalten wird und auch nicht kontrolliert, wie für eine solche Simultanverstreckung notwendig aufgeheizt ist.

Die Folie in der Kluppe und am Rand ist eher zu heiß, durch die heiße Kluppe, dazwischen ist sie eher zu kalt, da dort keine heiße Luft nur die Strahlungswärme der Kluppe ankommt. Das macht die Folie bis zu einer gewissen Geschwindigkeit mit, danach reißt sie. Man muss bedenken, dass diese ungeplante Längsverstreckung (bei einem Kluppenabstand von 1 cm bei einem Winkel von 17 Grad) immerhin auf über 3 cm zwischen zwei Kluppen erfolgt. Bei einer Geschwindigkeit von 500 m/min findet diese Längsstreckung innerhalb von nur ca. 0,0018 s statt. Bei 700 m/min findet das nur mehr innerhalb von ca. 0,0012 s statt. Verteilt sich der Öffnungswinkel auf einige mehrere Kluppen, so verteilt sich dieser ungewollte Längsreckprozess entsprechend.

Die Grenzen der Belastbarkeit des Materials sind mit den Systemen des Standes der Technik erreicht.

Mit einem zunehmend höheren Folienausstoß und entsprechend höheren Geschwindigkeiten dürfte die Kettenschienen-/ Kluppenlösung technisch und wirtschaftlich immer schwieriger umzusetzen sein.

WO 2010/046738 A1 betrifft eine Filmspannvorrichtung, aufweisend zwei Paare von Halteeinheiten, die jeweils eine Spannrolle mit einer kreisförmigen Nut und ein Haltedrahtmaterial aufweisen, wobei das Filmmaterial zwischen Spannrolle und Haltedrahtmaterial eingeklemmt ist, und die Halteeinheiten das Filmmaterial in einer Transportrichtung transportieren, während das Filmmaterial unter Verwendung der Spannrolle und des Haltedrahtmaterials eingeklemmt ist.

Aufgabe ist es daher, Basisstrukturen, Vorrichtungen und Verfahren zum Transport von Folie bereitzustellen, mit welchen die beschriebenen Nachteile zumindest teilweise beseitigt werden können.

Diese Aufgabe wird durch die Basisstrukturen, Vorrichtungen und Verfahren gemäß den Ansprüchen gelöst.

Bereitgestellt wird demnach eine Basisstruktur für eine Vorrichtung zum Transport von Folie, wobei die Basisstruktur aufweist:
zumindest eine obere Führungseinheit und eine untere Führungseinheit, wobei die obere Führungseinheit zum Führen zumindest eines oberen beweglichen Seiles ausgestaltet ist und die untere Führungseinheit zum Führen zumindest eines unteren beweglichen Seiles ausgestaltet ist, wobei
das zumindest eine obere Seil und das zumindest eine untere Seil anordenbar sind, um die Folie an deren Seitenrand zumindest stellenweise zu klemmen und mitzunehmen, und wobei
zumindest eine Führungseinheit der Führungseinheiten ausgestaltet ist, die Folie über das von der Führungseinheit zumindest eine geführte Seil gegen das von der anderen Führungseinheit zumindest eine geführte Seil zu drücken.

Die aus dem Stand der Technik bekannte Ketten-/Kluppenlösung zum Transport der Folie wird also durch eine Lösung mit geführten Seilen ersetzt. Dies führt zu einer Vereinfachung des Aufbaus. Zugleich sind höhere Transportgeschwindigkeiten möglich, weil sich Seile sehr gut antreiben, bewegen und umlenken lassenlassen.

Die untere Führungseinheit kann horizontal beweglich ausgestaltet und die obere Führungseinheit an der unteren Führungseinheit fixiert sein.

Eine Führungseinheit kann eine Anzahl von Rollenelementen aufweisen, welche ausgestaltet sind, das jeweilige zumindest eine Seil zu führen.

Zumindest ein Rollenelement von der Anzahl von Rollenelementen an der zumindest einen unteren Führungseinheit kann unterhalb des zumindest einen von der zumindest einen unteren Führungseinheit geführten Seiles angeordnet sein.

Zumindest ein Rollenelement von der Anzahl von Rollenelementen an der zumindest einen oberen Führungseinheit kann oberhalb des zumindest einen von der zumindest einen oberen Führungseinheit geführten Seiles angeordnet sein.

Zumindest ein Rollenelement von der Anzahl von Rollenelementen an der zumindest einen unteren Führungseinheit kann horizontal neben dem von der zumindest einen unteren Führungseinheit zumindest einen geführten Seil angeordnet sein.

Zumindest ein Rollenelement von der Anzahl von Rollenelementen an der zumindest einen oberen Führungseinheit kann horizontal neben dem von der zumindest einen oberen Führungseinheit zumindest einen geführten Seil angeordnet sein.

Zumindest ein Rollenelement von der Anzahl von Rollenelementen an der zumindest einen unteren Führungseinheit kann eine Drehachse aufweisen, die zur Vertikalen und zur Horizontalen geneigt ist, insbesondere in 45 Grad zur Vertikalen.

Zumindest ein Rollenelement von der Anzahl von Rollenelementen an der zumindest einen oberen Führungseinheit kann eine Drehachse aufweisen, die zur Vertikalen und zur Horizontalen geneigt ist, insbesondere in 45 Grad zur Vertikalen.

Zumindest zwei Rollenelemente von der Anzahl von Rollenelementen an der zumindest einen unteren Führungseinheit können horizontal neben dem von der zumindest einen unteren Führungseinheit zumindest einen geführten Seil angeordnet sein, wobei eines der zumindest zwei Rollenelemente auf der einen Seite des zumindest einen Seiles angeordnet ist und zumindest ein Rollenelement der zumindest zwei Rollenelemente auf der anderen Seite des zumindest einen Seiles angeordnet ist und die beiden Rollenelemente auf einer gemeinsamen Linie senkrecht zu dem zumindest einen Seil angeordnet sind.

Zumindest zwei Rollenelemente von der Anzahl von Rollenelementen an der zumindest einen oberen Führungseinheit können horizontal neben dem von der zumindest einen oberen Führungseinheit geführten Seil angeordnet sein, wobei eines der zumindest zwei Rollenelemente auf der einen Seite des Seiles angeordnet ist und zumindest ein Rollenelement der zumindest zwei Rollenelemente auf der anderen Seite des einen Seiles angeordnet ist und die beiden Rollenelemente auf einer gemeinsamen Linie senkrecht zu dem Seil angeordnet sind.

Zumindest zwei Rollenelemente von der Anzahl von Rollenelementen können so angeordnet sein, dass sie das zumindest eine geführte Seil zwischen sich klemmen.

Die Klemmung der Folie kann durch einander gegenüber liegende Rollenelemente und deren Druck auf die Seile bewirkt werden. Die Seile geben den Druck auf die Folie weiter.

Die Folie kann zwischen das zumindest eine obere Seil auf der oberen Folienfläche und das zumindest eine untere Seil auf der unteren Folienfläche klemmbar sein.

Die zumindest eine obere Führungseinheit und die zumindest eine untere Führungseinheit können in horizontaler Richtung gegeneinander verschiebbar sein, um die Klemmung der Folie zu beeinflussen.

Zumindest ein Seil kann ein Endlosseil, insbesondere ein aus Stahl gefertigtes Seil, sein.

Zumindest ein Seil kann aus Kunststoff sein oder einen Anteil aus Kunststoff aufweisen, insbesondere eine Ummantelung und/oder eine Seele aus Kunststoff. Die gesamte Auslegung und Anordnung der Seile soll damit die Klemmung der Folie optimieren.

Zumindest ein Seil kann (z.B. in seinem Kern) Vorrichtungen zur Messung von Prozessdaten wie z.B. Temperaturen und/oder Datenleitungen und zur Übertragung der Prozessdaten oder davon abgeleiteter Daten nach außerhalb des Seiles aufweisen.

Die Erfindung umfasst auch eine Vorrichtung zum Transport von Folie in einer Transportrichtung, insbesondere für eine Reckanlage, aufweisend:
zumindest zwei Basisstrukturen wie weiter oben beschrieben, wobei die eine Basisstruktur in Transportrichtung rechts angeordnet ist und andere Basisstruktur in Transportrichtung links angeordnet ist, wobei die zumindest zwei Basisstrukturen ausgestaltet sind, die jeweils von ihnen führbaren Seile mit gleicher Geschwindigkeit zu führen.

Die Vorrichtung kann weiter umfassen: Jeweils zumindest ein Rollenelement zum Antreiben eines Seile und/oder jeweils zumindest ein Rollenelement zum Spannen zumindest eines Seiles.

Die Vorrichtung kann weiter umfassen: einen Einlaufabschnitt, an welchem das zumindest eine obere Seil und das zumindest eine untere Seil einen Winkel bilden, der in einer vertikalen Ebene gegen die Transportrichtung geöffnet ist, derart, dass die Folie zwischen die Seile einführbar ist.

Die Vorrichtung kann weiter umfassen: einen Reckabschnitt, in welchem die linken Seile und die rechten Seile so geführt sind, dass sie in Transportrichtung in einem Winkel voneinander auseinanderlaufen, der in der Transportrichtung geöffnet ist, derart, dass die Folie zwischen den Seilen verstreckbar ist.

Die Vorrichtung kann weiter umfassen: einen Auslaufabschnitt, an welchem das zumindest eine obere Seil und das zumindest eine untere Seil einen Winkel bilden, der in einer vertikalen Ebene in der Transportrichtung geöffnet ist, derart, dass die Folie von einer Klemmung zwischen den Seilen befreibar ist.

Die Vorrichtung kann weiter umfassen: ein Rollenelement am Auslaufabschnitt, wobei das Rollenelement verstellbar angeordnet ist, um die Auslaufbreite der Folie einzustellen.

Jede Basisstruktur kann ausgestaltet sein, die Seile in Querrichtung zur Transportrichtung und vertikal zur Transportrichtung zu fixieren, wobei jeweils Rollenelemente vorgesehen sind, welche zur Fixierung beitragen.

Die Vorrichtung kann weiter umfassen: eine Heizeinrichtung zum Aufheizen der Seile angeordnet ist.

Die Vorrichtung kann weiter umfassen: eine Kühleinrichtung zum Kühlen der Seile angeordnet ist.

Die Vorrichtung kann weiter umfassen: eine Mess- und Regeleinrichtung zur Temperaturkontrolle der Seile und/oder der Führungseinheiten eingebaut ist.

Die Erfindung umfasst des Weiteren ein Verfahren zum Transport von Folie in einer Transportrichtung, insbesondere für eine Reckanlage, wobei das Verfahren in einer Vorrichtung gemäß einem der Ansprüche 8 bis 12 ausgeführt wird, wobei zumindest ein oberes sich bewegendes Seil und zumindest ein unteres sich bewegendes Seil geführt werden, und
das zumindest eine obere geführte Seil und das zumindest eine untere geführte Seil die Folie an deren Seitenrand zumindest stellenweise klemmen und mitnehmen, wobei die Folie zwischen das zumindest eine obere Seil auf der oberen Folienfläche und das zumindest eine untere Seil auf der unteren Folienfläche geklemmt wird.

Das Verfahren kann in einer Vorrichtung gemäß der Erfindung zum Einsatz kommen.

Die Folie kann in Transportrichtung linksseitig und rechtsseitig geführt werden.

Die Seile können durch Rollenelemente geführt werden.

Jedes Seil kann durch zumindest ein Rollenelement gespannt und jedes Seil durch zumindest ein Rollenelement angetrieben werden.

Es können Temperaturen zumindest eines Seiles gemessen und reguliert werden.

Es können ferner Parameter (z.B. Temperaturen), die in zumindest einem der Seile gemessen werden, nach außerhalb des zumindest einen Seiles übertragen werden.

Unter Anwendung des zuvor beschriebenen Verfahrens kann auch die Folie, insbesondere Endlosfolie, hergestellt werden.

Bei der Folie kann es sich um eines von polyolefinen Rohstoffen, Polyester, Polyamid, PLA, Polystyrenen, Polykarbonaten handeln.

Die Folie kann ein teilkristalliner thermoplastischer Kunststoff sein.

Die Folie ist üblicherweise Endlosfolie.

Die Verwendung von Seilen- und Rollensystemen statt Kluppen- bzw. Kettensystemen ermöglicht also eine höhere Anlagengeschwindigkeit und höhere Durchsatzleistungen somit einen höheren Ausstoß der Anlage bei einfacherem Aufbau.

Die Erfindung und Ausführungsbeispiele werden anhand der Zeichnung näher beschrieben. Hierin zeigt
- Fig. 1: eine Folientransportvorrichtung des Standes der Technik;
- Fig. 2: den Übergang zwischen Aufheizbereich und Reckbereich bei der Transportvorrichtung der Fig. 1;
- Fig. 3: eine Basisstruktur gemäß einem ersten Ausführungsbeispiel der Erfindung;
- Fig. 4: eine Sicht von oben auf die Basisstruktur gemäß Fig. 3;
- Fig. 5: eine Basisstruktur gemäß einem zweiten Ausführungsbeispiel der Erfindung;
- Fig. 6: eine Basisstruktur gemäß einem dritten Ausführungsbeispiel der Erfindung;
- Fig. 7: eine Sicht von oben auf die Basisstruktur gemäß Fig. 6;
- Fig. 8: eine seitliche Sicht auf die Basisstruktur des Ausführungsbeispiels gemäß Fig. 3;
- Fig. 9: eine seitliche Sicht auf den Einlaufbereich (oben) und den Auslauf-bereich (unten) der Basisstruktur des Ausführungsbeispiels gemäß Fig. 3; und
- Fig. 10: eine Winkelverstellung über mehrere (kurze) Führungseinheiten;
- Fig. 11: eine Abwandlung der Führungseinheit des Ausführungsbeispiels gemäß Fig. 5;
- Fig. 12: eine Abwandlung der Führungseinheit des Ausführungsbeispiels gemäß Fig. 5;
- Fig. 13: eine weitere Abwandlung der Führungseinheit des Ausführungsbeispiels gemäß Fig. 5;
- Fig. 14: eine Abwandlung der Führungseinheit des Ausführungsbeispiels gemäß Fig. 6; und
- Fig. 15: eine Sicht von oben auf eine Hälfte der Anlage.

Im gesamten vorliegenden Text beziehen sich Angaben zur Orientierung wie "links", "rechts", "oben", "unten", "seitlich" auf die Transportrichtung MD bzw. auf die Folie 100, sofern nicht anders angegeben.

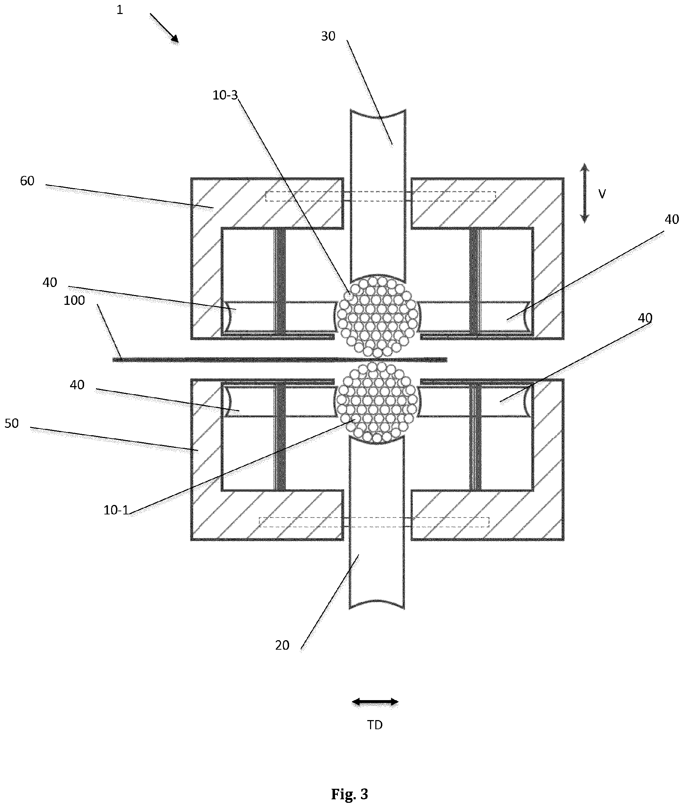

Fig. 3 illustriert grundlegende Prinzipien der Erfindung anhand des ersten Ausführungsbeispiels der Erfindung. Die erfindungsgemäße Basisstruktur 1 für eine Vorrichtung zum Transport von Folie 100 weist auf: zumindest eine obere Führungseinheit 60 und eine untere Führungseinheit 50, wobei die obere Führungseinheit 60 zum Führen zumindest eines oberen beweglichen Seiles 10-3 ausgestaltet ist und die untere Führungseinheit 50 zum Führen zumindest eines unteren beweglichen Seiles 10-1 ausgestaltet ist, wobei das zumindest eine obere Seil 10-3 und das zumindest eine untere Seil 10-1 anordenbar sind, um die Folie 100 an deren Seitenrand zumindest stellenweise zu klemmen und mitzunehmen, wobei jede Führungseinheit 50, 60 zum Führen zumindest eines Seiles 10-1, 10-3 ausgestaltet ist, und wobei zumindest eine Führungseinheit 60 der Führungseinheiten 50, 60 ausgestaltet ist, die Folie 100 über das von der Führungseinheit 60 zumindest eine geführte Seil 10-3 gegen das von der anderen Führungseinheit 50 zumindest eine geführte Seil 10-1 zu drücken, und wobei die untere Führungseinheit 50 dazu ausgestaltet ist, die obere Führungseinheit 60 zu stützen. In Fig. 3 ist nur die obere Führungseinheit 60 dazu ausgestaltet, vertikal zu drücken, wie dies durch den Doppelpfeil V angedeutet ist.

Die Folie 100 liegt auf dem zumindest einen unteren Seil 10-1 auf und ist durch das zumindest eine untere Seil 10-1 sowie das obere Seil 10-3 geklemmt. Auf diese Weise ist die Folie 100 mit den beweglichen Seilen in Transportrichtung MD transportierbar.

Als obere Führungseinheit 60 sei diejenige bezeichnet, deren Seil 10-3 die Folie 100 auf deren Oberseite berührt, die untere Führungseinheit 50 sei diejenige, deren zumindest eines Seil 10-1 die Folie 100 auf deren Unterseite berührt.

Die betreffende obere Führungseinheit 60 oder ein Teil davon ist vertikal beweglich ausgestaltet. Die Lagerung der Rollenelemente der oberen Führungseinheit ist also so ausgestaltet, dass der Druck gemessen und eingestellt werden kann.

Jede Führungseinheit 50, 60 umfasst jeweils zumindest ein Rollenelement 20, 30, 40, welches ausgestaltet ist, das jeweilige zumindest eine Seil 10-1, 10-3 zu führen. Die untere Führungseinheit 50 ist horizontal beweglich ausgestaltet, und die obere Führungseinheit 60 ist an der unteren Führungseinheit 50 beweglich fixiert. Beim Beispiel der Fig. 3 weist die obere Führungseinheit 60 zumindest ein Rollenelement auf, welches oberhalb des von der oberen Führungseinheit geführten Seiles 10-3 angeordnet ist, und zumindest ein Rollenelement, welches horizontal neben dem von der oberen Führungseinheit geführten Seil 10-3 angeordnet ist. Die untere Führungseinheit 50 weist zumindest ein Rollenelement auf, welches unterhalb des zumindest einen von der unteren Führungseinheit geführten Seiles 10-langeordnet ist, und zumindest ein Rollenelement, welches horizontal neben dem von der unteren Führungseinheit 50 geführten Seil 10-1 angeordnet ist.

Die untere Führungseinheit 50 ist in vertikaler Richtung unbeweglich. Ihre Länge entspricht der einer Ofenzone, typisch sind das ca. 4 m. Sie liegt auf einer dafür vorgesehenen Konstruktion, z.B. Ständern, auf. Die unteren Führungseinheiten 50 sind horizontal auf diesen Ständern im Sinne des Reckens verschiebbar.

Die obere Führungseinheit 60 ist also mit der unteren Führungseinheit 50 horizontal beweglich und bietet auch die Möglichkeit, den Druck auf das obere Seil 10-3 und damit die Klemmkraft auf die Folie 100 zu beeinflussen. Die obere Führungseinheit 60 besitzt üblicherweise die gleiche Länge wie die untere Führungseinheit 50, an der sie fixiert ist.

Die erfindungsgemäße Basisstruktur 1 kann mehrere Bereiche umfassen bzw. in mehrere Bereiche unterteilt sein. Die Führungseinheiten 50, 60 in einem Bereich können unterschiedlich zu den Führungseinheiten 50, 60 in einem anderen Bereich sein. Die Bereiche können - müssen aber nicht - den eingangs erläuterten Bereichen I bis IV entsprechen.

Die Klemmkraft auf die Folie 100 entsteht durch den Druck des oberen Seiles 10-3 gegen das untere Seil 10-1. Die Klemmkraft auf die Folie 100 wird durch Mittel eingestellt, welche auf die oberen Führungseinheiten 60 oder Teile davon wirken. Diese Mittel können, zusätzlich zu der Schwerkraft der oberen Führungseinheiten 60 und der oberen Seile 10-3, Vorrichtungen umfassen, welche Druck auf die oberen Führungseinheiten 60 oder Teile davon ausüben, den diese über das Seil 10-3 weitergeben. Diese Vorrichtungen können z.B. pneumatisch und/oder elektrisch wirken. Zusätzlich können Vorrichtungen vorgesehen sein, die den Druck der Klemmung erfassen und in Abhängigkeit von dem erfassten Druck den Druck auf die jeweiligen oberen Führungseinheiten 60 oder Teile davon justieren.

Jedes Seil 10-1, 10-3 ist hier ein Endlosseil, insbesondere ein aus Stahl gefertigtes Seil. Ein derartiges Endlosseil lässt sich z.B. durch Spleißen der Enden eines Seils herstellen.

Die Seile können auch einen Kern aus Plastik haben oder z.B. eine raue Oberfläche und/oder eine Plastikhülle um ein Metall- oder Kunststoffseil herum aufweisen.

Auch können die Seile reine Kunststoffseile sein oder aus einer Mischung aus Stahl und Kunststoff bestehen. Diese Seile können auch eine glatte Oberfläche aufweisen oder entsprechend mit einer Kunststoff-Hülle überzogen sein.

Zumindest ein Seil kann (z.B. in seinem Kern) Vorrichtungen zur Messung von Prozessdaten wie z.B. Temperaturen und/oder Datenleitungen und zur Übertragung der Prozessdaten oder davon abgeleiteter Daten nach außerhalb des Seiles aufweisen.

Durch die Wahl der Materialien für die Seile kann die Klemmwirkung sowie auch die Temperatur der Seile beeinflusst werden. So lässt sich ein Seil mit Kunststoffanteil leichter auf niedriger Temperatur halten und somit besser kühlen, weil es weniger Wärme aufnimmt. Ein Seil, das im Vergleich zu der Folie auf niedrigerer Temperatur ist, kann hinsichtlich des Anhaftens der relativ hierzu wärmeren Folie am Seil effektiver sein.

Die Seile lassen sich in den Führungseinheiten 50, 60 sehr effizient mit Luft kühlen.

Die Beschaffenheit der Oberfläche der Seile spielt auch eine Rolle beim Klemmen, Verstrecken und Transportieren der Folie. So kann durch eine Aufrauhung der Oberfläche oder aber durch eine sehr glatte Oberfläche die Anhaftung der Folie beeinflusst werden, unabhängig von der Klemmung. Über eine richtungsanisotrope Beschaffenheit (Rauheit, Glätte) der Seile kann z.B. ein gewisser Schlupf der Folie in der einen Richtung (z.B. in MD) begünstigt werden, während der Schlupf in der anderen Richtung (z.B. TD) verringert oder ganz verhindert wird. Hiermit könnten Laufwegunterschiede der Seile bei versetzter Anordnung beim Übergang zwischen dem Bereich I und dem Bereich II ausgeglichen werden.

Schlupf kann gänzlich vermieden werden durch besonders glatte Seiloberflächen, wie sie z.B. durch Überzug des Seiles mit einem Kunststoffmantel bewirkt werden können.

Auch kann das obere Seil 10-3 eine andere (insbesondere entgegengesetzte) Schlagrichtung aufweisen als das zumindest eine untere Seil 10-1, 10-2. Dann können die Litzen des oberen Seiles 10-3 und des zumindest einen unteren Seiles 10-1, 10-2 besser ineinander zum Liegen kommen mit zusätzlicher Wirkung hinsichtlich Schlupf und Klemmung der Folie 100.

Des Weiteren können die Seile unterschiedlich dick sein. So kann z.B. das zumindest eine untere Seil 10-1 bzw. 10-2 dicker als das obere Seil 10-3 sein.

Die Rollenelemente 20, 30, 40, 45 können mit ihren Laufflächen die Seile jeweils mehr oder weniger stark umgreifen und somit auch führen.

Zumindest zwei Basisstrukturen 1 bilden zusammen eine Vorrichtung zum Transport von Folie 100 in einer Transportrichtung MD, insbesondere für eine Reckanlage, wobei die eine Basisstruktur 1 in Transportrichtung MD links angeordnet ist und andere Basisstruktur 1 in Transportrichtung MD rechts angeordnet ist, wobei die zumindest zwei Basisstrukturen ausgestaltet sind, die jeweils von ihnen führbaren Seile mit gleicher Geschwindigkeit zu führen.

Die linke Basisstruktur 1 ist also angeordnet, die Folie 100 an ihrem linken Rand zu klemmen, und die rechte Basisstruktur 1 ist angeordnet, die Folie 100 an ihrem rechten Rand zu klemmen. Entsprechend den verschiedenen Anforderungen in den Bereichen I bis IV (vgl. Fig. 1) an die Führung der Seile können die Basisstrukturen dort jeweils unterschiedlich ausgestaltet sein. Im Folgenden werden unterschiedliche Varianten beschrieben.

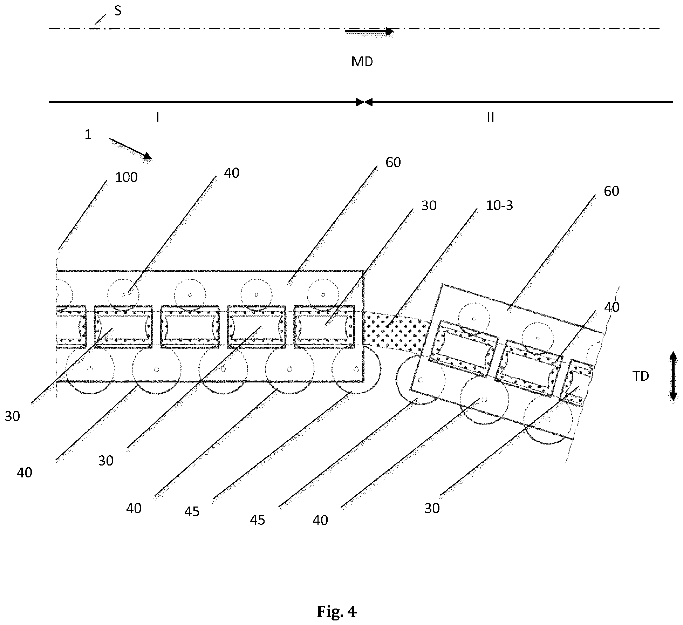

Fig. 4 zeigt die Anordnung mit zwei Seilen 10-1 - 10-3 pro Seite in der Draufsicht von oben auf die Basisstruktur 1. Hierbei sind nur die obere Führungseinheit 60 und das von ihre geführte Seil 10-3 zu sehen, die untere Führungseinheit 50 und das untere Seil 10-1 sind verdeckt. Gezeigt ist der Übergangsbereich zwischen der Heizzone (Bereich I), links in der Figur, und der Reckzone (Bereich II), rechts in der Figur, und zwar nur die rechte Basisstruktur 1. Die linke Basisstruktur 1 wäre spiegelverkehrt bezüglich der eingezeichneten Symmetrieachse S in MD-Richtung angeordnet. In der Heizzone (Bereich I) sind die linken Seile (nicht gezeigt) von oben betrachtet parallel zu den rechten Seilen geführt. In der Reckzone (Bereich II) laufen die linken Seile (nicht gezeigt) und die rechten Seile von oben betrachtet jeweils nach außen auseinander, so dass sie einen sich in Transportrichtung MD öffnenden Winkel in bilden. Der Abstand der linken Seile von den rechten Seilen vergrößert sich also in Transportrichtung MD. Hierdurch wird die zwischen den Seilen geklemmte Folie in transversaler Richtung TD gestreckt. Für die Umlenkung der Seile sind Umlenkrollenelemente 45 vorgesehen, die im Bereich des Übergangs zwischen der Vorheizzone 1 und der Reckzone 2 angeordnet sind. Die seitlichen Führungsrollenelemente 40 können seitlich des jeweiligen Seils einander gegenüber liegend angeordnet sein oder aber in MD-Richtung versetzt zueinander angeordnet sein.

Die Klemmung der Folie 100 kann durch vertikal übereinander angeordnete Rollenelemente 20, 30 bewirkt werden, welche auf die Seile wirken. Diese Rollenelemente 20, 30 können im Längsschnitt auf einer vertikalen Linie (durch ihre jeweiligen Mittelebenen verlaufend) liegen, wie Fig. 3 dies zeigt. Dann liegen die Mittelpunkte der geführten Seile im Querschnitt auf einer vertikalen Linie.

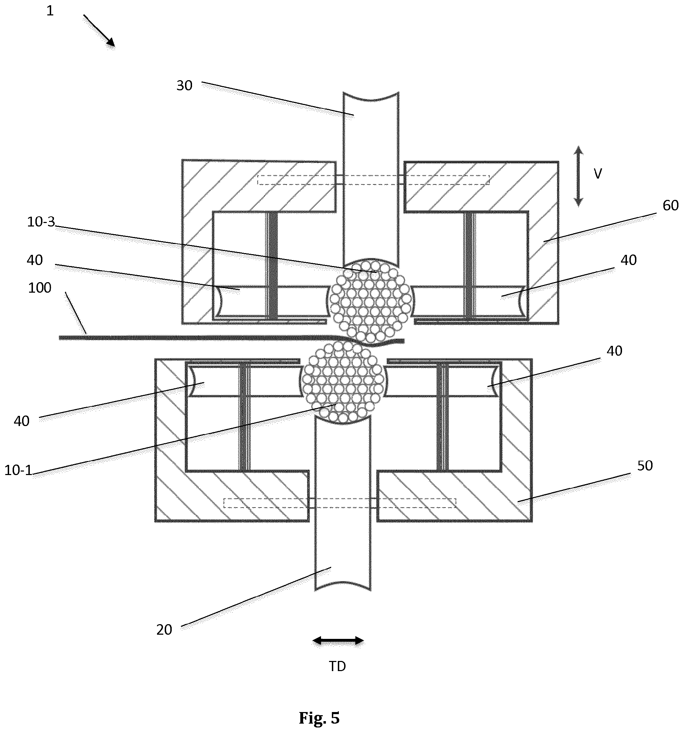

Die Rollenelemente können auch übereinander liegend sein, aber in der Horizontalen quer zur Transportrichtung (also in TD-Richtung) gegeneinander versetzt sein. Dann liegen die Mittelpunkte der geführten Seile (im Querschnitt betrachtet) auf einer vertikal geneigten, also schrägen Linie. Dies zeigt das Ausführungsbeispiel gemäß Fig. 5. Bei dieser Konfiguration lässt sich die Klemmkraft besonders gut einstellen und verteilen, weil sie sowohl durch die (überwiegend) vertikal wirkenden Rollenelemente 20, 30 als auch durch die (überwiegend) horizontal wirkenden Rollenelemente 40 zustande kommt. Die Kraft kann hier besonders gut auf die Seile übertragen werden. Auch lässt sich die Zuführung heißer Luft zu den Seilen besser realisieren.

Zudem ist die hier Umschlingung der Folie 100 zumindest um das untere Seil 10-1 quer zur Transportrichtung (also in TD-Richtung) erhöht, weil die Folie 100 (im Querschnitt gemäß Fig. 5 betrachtet) über den Umfang des unteren Seiles 10-1 herumgeführt und umgelenkt ist, und zwar um etwa die Bogenlänge, welche dem Neigungswinkel der Verbindungsgeraden der Mittelpunkte der Seile zur Vertikalen (im Querschnitt gemäß Fig. 5 betrachtet) entspricht. Die Umschlingung führt also zu einer vergrößerten Kontaktfläche zwischen Seil 10-1 und Folie 100, was eine erhöhte Haftung der Folie am Seil 10-1 mit sich bringen kann.

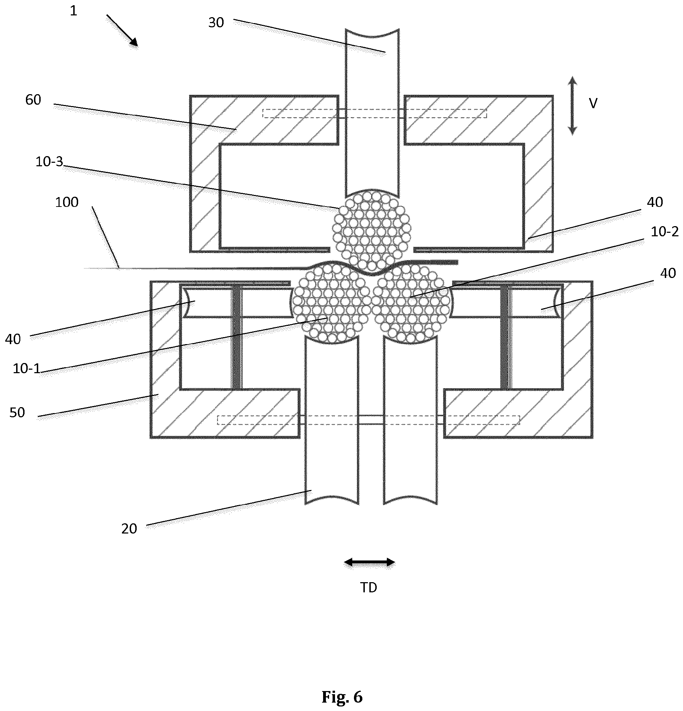

Bei einem weiteren Ausführungsbeispiel ist jede Basisstruktur ausgestaltet, ein oberes Seil 10-3 und zwei untere Seile 10-1, 10-2 zu führen, wobei die Folie 100 zwischen das obere Seil 10-3 auf der einen Folienfläche und die beiden unteren Seile 10-1, 10-2 auf der anderen Folienfläche klemmbar ist. Die untere Führungseinheit 50 führt die beiden unteren Seile 10-1, 10-2, die obere Führungseinheit 60 führt das obere Seil 10-3. Fig. 6 zeigt eine Basisstruktur gemäß diesem Ausführungsbeispiel im Querschnitt. Das obere Seil 10-3 wird in den Rollenelementen 30 geführt und gegen die Folie 100 gedrückt. Die unteren Seile 10-1 und 10-2 werden jeweils durch ein unteres Rollenelement 20 in der Vertikalen geführt und durch Rollenelemente 30 bzw. 40 in der Horizontalen. Bei diesem Ausführungsbeispiel können die Mittelpunkte der Seile im Querschnitt ein gleichschenkliges oder gleichseitiges Dreieck bilden. Die Folie wird hier besonders gut gehalten, weil die Umschlingung der Folie 100 hierbei sowohl auf die unteren Seile 10-1 und 10-2 als auch auf das obere Seil 10-3 (quer zur Transportrichtung) erhöht ist, denn die Folie wird in Querrichtung an drei Seilen auf einer Bogenlänge kontaktiert.

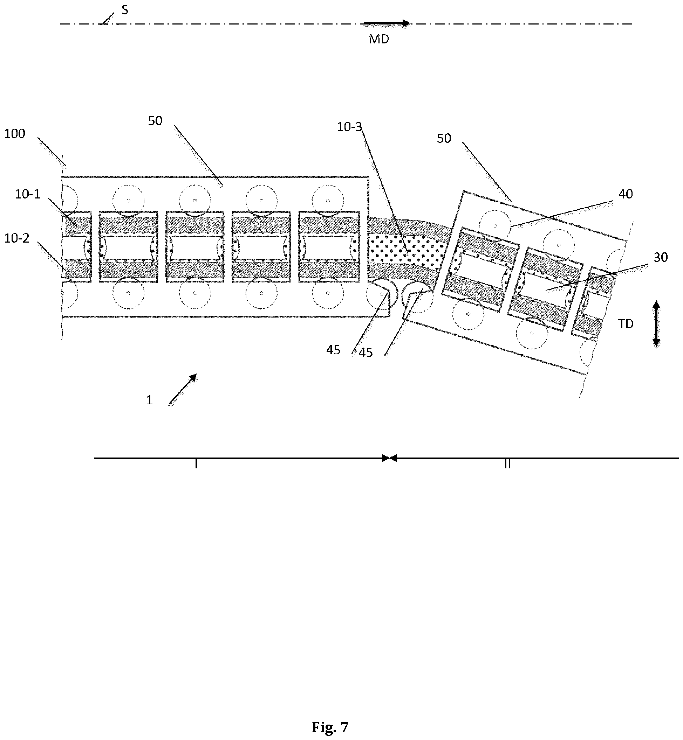

Fig. 7 zeigt das System mit den drei Seilen 10-1, 10-2, 10-3 schematisch von oben. Aus Gründen der besseren Übersichtlichkeit ist der Blick hierbei auf die beiden unteren Seile 10-1, 10-2 freigegeben, obwohl die Seile 10-1, 10-3 in einem horizontalen, geradlinigen Schnitt durch Teile der Führungseinheit 50 verdeckt wären

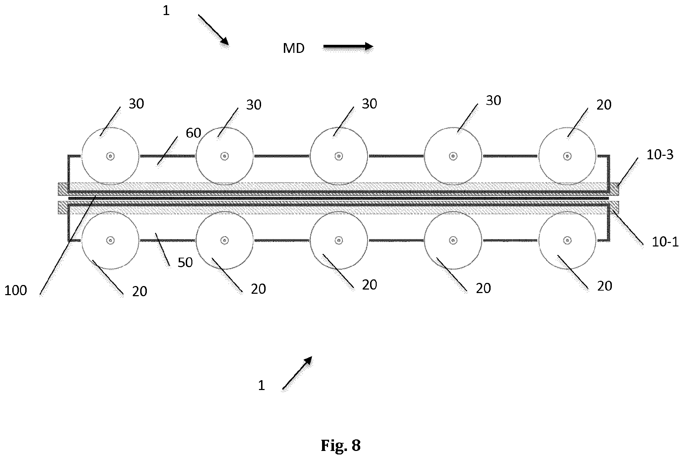

Fig. 8 zeigt einen Bereich der Basisstruktur 1 von der Seite. Das obere Seil 10-3 wird durch die Rollenelemente 30 der oberen Führungseinheit 60 geführt, das untere Seil 10-1 wird durch die Rollenelemente 20 der unteren Führungseinheit 50 geführt. Die obere Führungseinheit ist vertikal beweglich gelagert, derart, dass die zwischen den Seilen 10-1 und 10-3 verlaufende Folie 100 durch die Seile geklemmt wird. Somit wird die Folie 100 bei Bewegung der Seile mitgenommen und durch die Transportvorrichtung transportiert. Hier haben alle Rollenelemente 20, 30 denselben Durchmesser und sind gegenüberliegend angeordnet. Allerdings muss das nicht immer so sein.

Im Bereich II (Reckabschnitt) sind die linken Seile und die rechten Seile so geführt, dass sie in Transportrichtung MD in einem Winkel voneinander auseinanderlaufen, der in der Transportrichtung MD geöffnet ist, derart, dass die Folie 100 reckbar ist.

Hierdurch erfolgt die Verstreckung der Folie transversal zur Transportrichtung MD, also in TD-Richtung.

Je nach Anforderung können die Basisstrukturen ausgestaltet sein, um die Seile in Querrichtung TD zur Transportrichtung MD und in vertikaler Richtung zu fixieren. Hierfür können jeweils Rollenelemente vorgesehen sein, welche zur Fixierung beitragen.

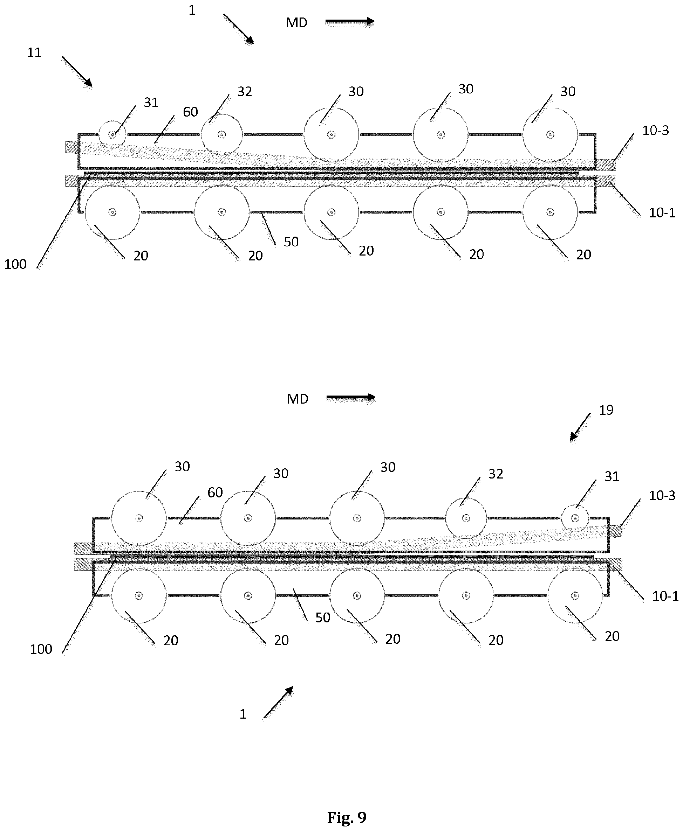

Fig. 9 zeigt schematisch die Situation am Einlauf 11 der Folientransportvorrichtung (Abbildung oben), also in dem Bereich, wo die Folie 100 in die Folientransportvorrichtung aufgenommen wird, und am Auslauf 19 der Folientransportvorrichtung (Abbildung unten), also in dem Bereich, wo die Folie 100 abgegeben wird. Am Einlauf 11 bilden das zumindest eine obere Seil 10-3 und das zumindest eine untere Seil 10-1 einen Winkel, der in einer vertikalen Ebene gegen die Transportrichtung MD geöffnet ist, derart, dass die Folie zwischen die Seile einführbar ist.

Am Einlauf 11 wird die Folie 100 seitlich jeweils zwischen das obere Seil 10-3 und das untere Seil 10-1 eingefädelt. Hier werden die beiden Seile in einem vertikalen Abstand zueinander geführt, der sich in Transportrichtung MD verringert. Dies kann dadurch realisiert werden, dass die Rollenelemente 30 einer der Führungseinheiten, z.B. die obere 60 für das obere Seil 10-3, am Einlauf der Anlage verschiedene Durchmesser haben, wobei das erste Rollenelement 31 den kleinsten Durchmesser hat und in MD nachfolgende Rollenelemente 32, 30 ansteigenden Durchmesser haben. Die Mittelpunkte aller Rollenelemente 30, 31, 32 können dann, von der Seite betrachtet, auf einer gemeinsamen horizontalen Linie in MD liegen. Alternativ kann der Durchmesser der Rollenelemente gleich sein und die Rollenelemente am Einlauf liegen auf einer in MD fallenden Linie (in der Figur nicht gezeigt). Möglich ist auch eine Kombination der beiden Maßnahmen. Auf diese Weise werden die Seile in MD zusammengeführt, um die Folie zu erfassen und zu klemmen.

Am Auslauf 19, also in Transportrichtung MD am Ausgang der Folientransportvorrichtung, bilden das zumindest eine obere Seil und das zumindest eine untere Seil einen Winkel, der in einer vertikalen Ebene in der Transportrichtung MD geöffnet ist, derart, dass die Folie von einer Klemmung zwischen den Seilen lösbar ist. Die Folie kann dort von der Vorrichtung abgelöst, ihr Rand beschnitten und die Folie weiterbearbeitet und z.B. auf eine Rolle aufgewickelt werden. Dies ist im unteren Bild der Fig. 9 illustriert.

Am Auslauf 19 laufen die Seile also auseinander, um die Folie 100 von der Klemmung durch die Seile freizugeben. Hier verringert sich der Durchmesser der Rollenelemente 30, 31, 32, z.B. der oberen Führungseinheit 60 für das obere Seil 10-3, in Transportrichtung MD gegen den Auslauf hin. Das letzte Rollenelement 31 hat den kleinsten Durchmesser. Die Mittelpunkte der Rollenelemente 30, 31, 32 können, von der Seite betrachtet, auf einer horizontalen Linie liegen. Alternativ können die Rollenelemente 30 auch konstanten Durchmesser haben, aber auf einer in MD ansteigenden Linie angeordnet sein (in der Figur nicht gezeigt).

Überall dort, wo die Folie 100 transportiert aber nicht gestreckt wird, kann eine Führung der Seile 10,-1, 10-2, 10-3 mittels vertikal angeordneter Rollenelemente, die also eine horizontale Drehachse haben, genügen, denn die auftretenden transversalen Kräfte sind dort gering, es gibt keine Streckkräfte.

Dies ist der Fall am Einlauf sowie in dem Bereich I, also dort, wo die Folie vorgeheizt aber noch nicht gestreckt wird, sowie nach der Reckzone.

Im Bereich II, also dort, wo die Folie transversal gestreckt wird, kann zu der vertikalen Führung durch die zuvor beschriebenen Rollenelemente eine horizontale Führung durch Rollenelemente 40 hinzukommen, die horizontal angeordnet sind, also eine vertikale Drehachse haben, um die Klemmkräfte zu erhöhen und die Streckkräfte auf die Folie 100 zu übertragen. Die Rollen werden so angeordnet, um einen möglichst konstanten und kontinuierlichen Druck auf die Seile und damit die eingeklemmte Folie zu erzeugen.

Der Übergang zwischen den Bereichen I und II, also dort, wo vom reinen Transportmodus in den TD-Steckmodus übergegangen wird, kann in unterschiedlicher Weise ausgestaltet sein. So kann bereits die erste Führungseinheit 50 (bzw. 60) im Bereich II um den vollen Winkel nach außen verstellt sein, wobei die folgenden Führungseinheiten 50 (bzw. 60) in gerader Linie zur ersten Führungseinheit 50 (bzw. 60) im Bereich II angeordnet sind.

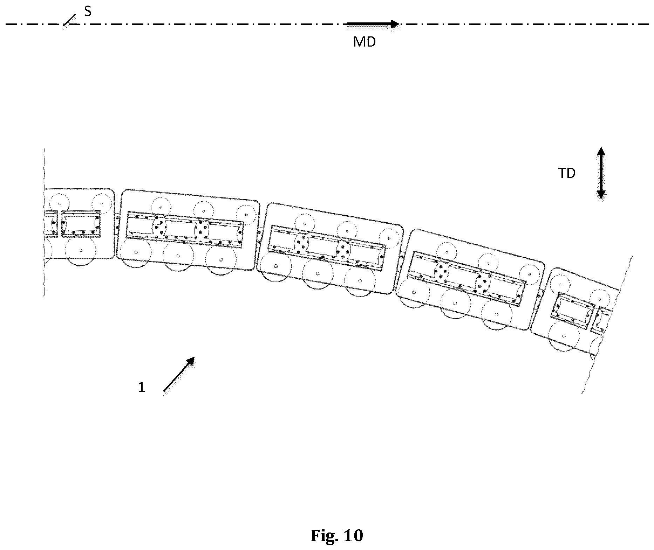

Alternativ kann auch vorgesehen sein, die Winkelverstellung über mehrere kürzere zueinander jeweils in kleineren Winkeln verstellte Führungseinheiten 50 (bzw. 60) zu realisieren, wie dies Fig. 10 zeigt. In diesem Fall können auch etwaige Scherkräfte, die bei versetzten Seilen auf den Folienrand im Bereich der Umlenkung dieser Seile aufgrund des unterschiedlichen Laufwegs der Seile in diesem Bereich auftreten könnten, auf eine größere Distanz und mehrere kleinere Winkel in MD verteilt und damit minimiert werden.

Hier können auch horizontal angeordnete Rollen 45 für das Umlenken verwendet werden.

Was die Rollenelemente 20, 30, 40 anbelangt, so müssen diese nicht vollständig im Innern der jeweiligen Schienen bzw. Führungseinheiten 50, 60 liegen. Zumindest die oberen 30 und unteren Rollenelemente 20 können größer teilweise innerhalb und teilweise außerhalb der Führungseinheiten laufen. Dann sind sie leichter visuell zu kontrollieren und zu warten. Doch auch die seitlichen Rollenelemente 40 können teilweise in, teilweise außerhalb der Führungseinheiten 50, 60 liegen.

Zum Zweck der Wartung können die Rollenelemente einzeln von außen ausgetauscht werden, indem die betreffenden Achsen nach oben bzw. nach unten entfernt werden können. Einfache Inspektion und Austauschbarkeit der Rollenelemente erhöhen die Produktivität der Anlage, weil die Standzeiten reduziert werden.

Die Führungseinheiten 50, 60 können auch so ausgestaltet sein, dass sie als Ganze voneinander getrennt und ausgetauscht werden können.

Für die Ausgestaltung der Führungseinheiten 50, 60 gibt es noch zahlreiche weitere Abwandlungen, z.B. um die Führung der Seile zu optimieren, die Zahl der Rollenelemente 20, 30, 40 zu minimieren um damit Gewicht der Führungseinheiten oder die Zugänglichkeit der Rollenelemente etwa zu Wartungszwecken zu optimieren.

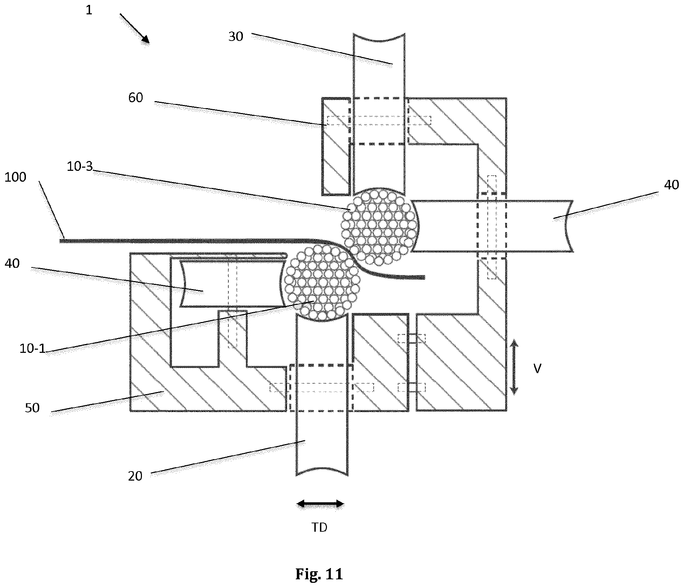

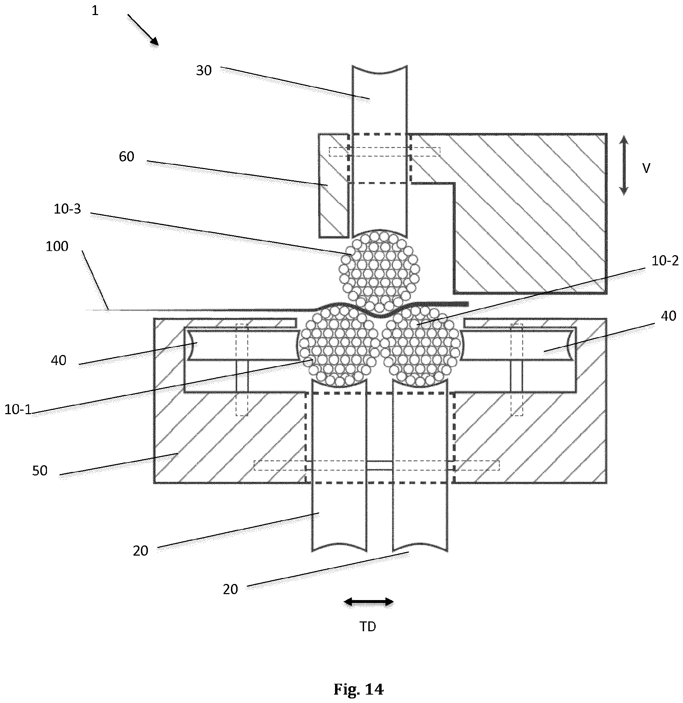

Fig. 11 bis Fig. 14 zeigen Abwandlungen der zuvor beschriebenen Führungseinheiten 50, 60. Fig. 11 zweigt eine Abwandlung des Ausführungsbeispiels gemäß Fig. 5. Hier wird bei der oberen Führungseinheit 60 auf das horizontale zur Folienmitte zeigende Rollenelement 40 und bei der unteren Führungseinheit 50 auf das horizontale äußere Rollenelement 40 verzichtet, so dass dann die Schienen, welche die Rollenelemente tragen, vereinfacht werden können.

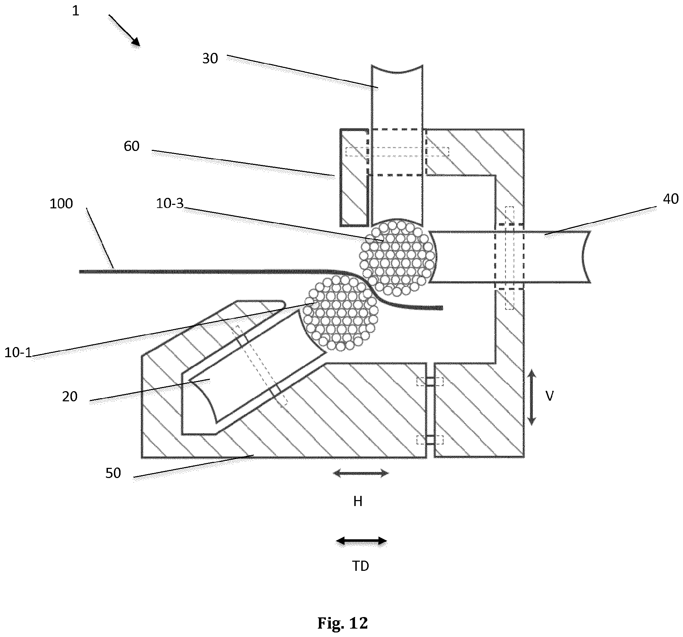

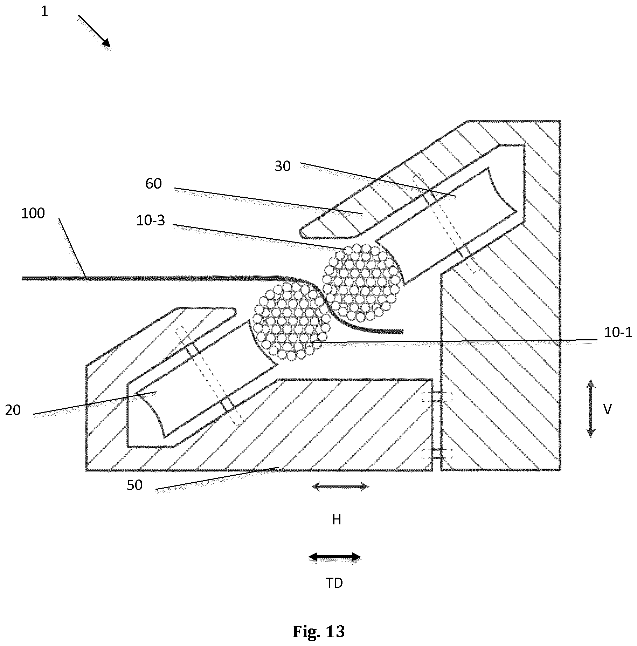

Eine weitere Vereinfachung des Ausführungsbeispiels kann durch schräg angeordnete Rollenelemente 20, 30 in der unteren 50 und/oder oberen Führungseinheit 60 vorgenommen werden. Fig. 12 zeigt die schräge Anordnung in der unteren Führungseinheit 50, Fig. 13 zeigt dies für beide Führungseinheiten 50, 60. Hierdurch können weitere Rollenelemente eingespart werden, so dass ein Rollenelement 20, 30 pro Führungseinheit 50, 60 ausreichend sein kann.

Die Führungseinheiten 50, 60 sind aus Metall gefertigt, die Rollenelemente 20, 30, 40, 45, 81, 82, 83, 84 ebenfalls. Andere Materialien sind auch möglich, wenn sie ausreichende mechanische und thermische Stabilität aufweisen.

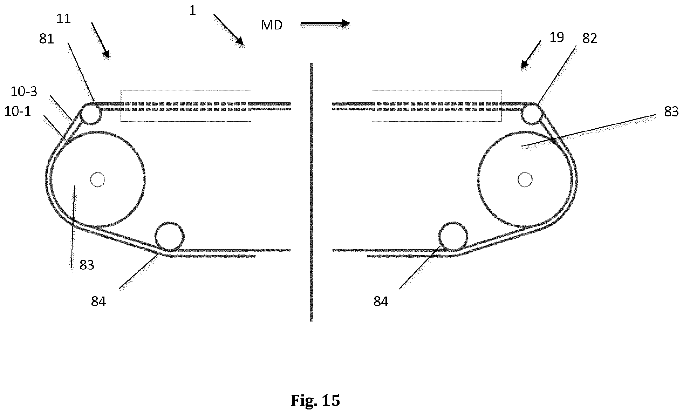

Fig. 15 zeigt die Vorrichtung schematisch von oben. Die Seile 10-1, 10-3 ersetzen die Kette und die Kluppen des Standes der Technik, die Führungseinheiten 50, 60 (Schieneneinheiten) führen die Seile über Rollenelemente 20, 30, 40,45.

Die zwei oder drei Seile werden über ein 2- bzw. 3-stöckiges Umlenk- und Antriebssystem am Reckofeneingang und am Reckofenausgang umgelenkt bzw. angetrieben.

Die Umlenkung und der Antrieb der Seile kann aber auch durch vertikal angeordnete Umlenk- und Antriebsräder erfolgen (nicht in der Figur gezeigt).

Im Rücklauf der Seile erfolgt die Seilspannung oder auch die Seilkühlung. Der Rücklauf kann sowohl im Reckofen parallel als auch außerhalb des Reckofens auf selber Höhe oder, um den Zugang zum Ofen zu erleichtern, über diesem angeordnet sein. Hierzu umfasst die Vorrichtung zumindest ein Rollenelement zum Antreiben jeweils eines Seiles 10-1, 10-2,10-3 und zumindest ein Rollenelement 84 zum Spannen des jeweiligen Seiles 10-1, 10-2 10-3, und zusätzliche Rollenelemente 81 zur Führung und Umlenkung des jeweiligen Seiles.

Vorteilhafterweise ist der Hauptantrieb der Seile vor oder nach der Umlenkung selbst angeordnet. Die Umlenkung mittels Umlenkungsrollenelement sorgt für die notwendige Seilspannung im Vorlauf, wohingegen die Seilspannung am Rücklauf der Seile von untergeordneter Bedeutung ist. Zum Hauptantrieb können zusätzliche Antriebe hinzukommen, die an anderer Stelle des Seiles angeordnet sind.

Die Seile sind so angetrieben, dass sie alle mit gleicher Geschwindigkeit laufen.

Zusätzlich zum Antrieb der Seile kann auch ein Antrieb vorgesehen sein, der direkt auf die Folie 100 wirkt.

Hierzu kann an Rändern der Folie 100 gezogen werden, die durch das randseitige Beschneiden der Folie 100 hinter dem Auslauf 19 entstehen.

Die Folientransportvorrichtung erlaubt vorteilhafterweise ein Zusammenfahren der Schienen über die gesamte Ofenlänge und auch am Auslauf. Das geschieht durch eine Verschiebung aller Führungsschienen und der gesamten Umlenkung am Auslauf mit allen Antrieben.

Der Grad der Verstreckung der Folie 100 im Bereich II lässt sich in einfacher Weise veränderbar gestalten, indem die Seilumlenkung und die Antriebsräder fix eingebaut sind in der äußersten Position im Auslauf. Durch Positionieren eines kleinen Rollenelements 82 zur Umlenkung auf einer Schiene hinter dem letzten Öffnungsteil kann dieses mit dieser Schiene mitverschoben werden. Lediglich die jeweilige Seillänge muss am Rücklauf des Seiles ausgeglichen werden, was z.B. mittels weiterer Rollenelementen zur Umlenkung möglich ist.

Eine ähnliche Funktion wenn auch in wesentlich geringerem Ausmaß übernimmt das Rollenelement 81 am Einlauf, es gleicht die dort üblicherweise gemessenen leichten horizontalen Verschiebungen der Folie aus und reagiert zusammen mit der Einkaufeinheit und der entsprechenden Messeinrichtung.

Der Seilrücklauf kann innerhalb des Reckofens parallel mit dem Vorlauf erfolgen oder außerhalb des Reckofens auf gleicher Höhe oder über Umlenkwalzen über dem Reckofen und einer geraden Rücklaufschiene. Am Rücklauf können zusätzlich Vorrichtungen zum Spannen, Kühlen, Kontrollieren und Reinigen der Seile 10-1, 10-2, 10-3 angeordnet sein.

Die gesamte Anordnung des Seilumlaufes kann über horizontal aber auch über vertikal angeordnete Antriebs- und Umlenkräder erfolgen.

## Patentansprüche

1. Basisstruktur (1) für eine Vorrichtung zum Transport von Folie (100), wobei die Basisstruktur (1) aufweist:
zumindest eine obere Führungseinheit (60) und eine untere Führungseinheit (50), wobei
die obere Führungseinheit (60) zum Führen zumindest eines oberen beweglichen Seiles (10-3) ausgestaltet ist und die untere Führungseinheit (50) zum Führen zumindest eines unteren beweglichen Seiles (10-1, 10-2) ausgestaltet ist, wobei
das zumindest eine obere Seil (10-3) und das zumindest eine untere Seil (10-1, 10-2) anordenbar sind, um die Folie (100) an deren Seitenrand zumindest stellenweise zu klemmen und mitzunehmen, und wobei
zumindest eine Führungseinheit (60) der Führungseinheiten (50, 60) ausgestaltet ist, die Folie (100) über das von der Führungseinheit (60) zumindest eine geführte Seil (10-3) gegen das von der anderen Führungseinheit (50) zumindest eine geführte Seil (10-1, 10-2) zu drücken.

2. Basisstruktur (1) gemäß Anspruch 1, wobei jede Führungseinheit (50, 60) eine Anzahl von Rollenelementen (20, 30, 40, 45) aufweist, welche ausgestaltet sind, das jeweilige zumindest eine Seil (10-1, 10-2, 10-3) zu führen.

3. Basisstruktur (1) gemäß Anspruch 2, wobei zumindest ein Rollenelement (20) von der Anzahl von Rollenelementen (20) an der zumindest einen unteren Führungseinheit (50) unterhalb des zumindest einen von der zumindest einen unteren Führungseinheit (50) geführten Seiles (10-1, 10-2) angeordnet ist und
wobei zumindest ein Rollenelement (30) von der Anzahl von Rollenelementen (30) an der zumindest einen oberen Führungseinheit (60) oberhalb des zumindest einen von der zumindest einen oberen Führungseinheit (60) geführten Seiles (10-3) angeordnet ist.

4. Basisstruktur (1) gemäß Anspruch 3, wobei zumindest zwei Rollenelemente (40) von der Anzahl von Rollenelementen so angeordnet sind, dass sie das zumindest eine geführte Seil (10-1, 10-2, 10-3) zwischen sich klemmen.

5. Basisstruktur (1) gemäß einem der vorherigen Ansprüche, wobei die Klemmung der Folie (100) durch einander gegenüber liegende Rollenelemente (20, 30, 40) und deren Druck auf die Seile bewirkt wird, welche auf die Seile (10-1, 10-2, 10-3) wirken.

6. Basisstruktur (1) gemäß einem der vorherigen Ansprüche, wobei die Folie (100) zwischen das zumindest eine obere Seil (10-3) auf der oberen Folienfläche und das zumindest eine untere Seil (10-1, 10-2) auf der unteren Folienfläche klemmbar ist.

7. Basisstruktur (1) gemäß einem der vorherigen Ansprüche, wobei das obere Seil (10-3) eine andere Schlagrichtung aufweist als das zumindest eine untere Seil (10-1, 10-2).

8. Vorrichtung zum Transport von Folie (100) in einer Transportrichtung (MD), insbesondere für eine Reckanlage, aufweisend:
zumindest zwei Basisstrukturen (1) gemäß einem der vorherigen Ansprüche, wobei die eine Basisstruktur (1) in Transportrichtung (MD) rechts angeordnet ist und andere Basisstruktur (1) in Transportrichtung (MD) links angeordnet ist, wobei die zumindest zwei Basisstrukturen (1) ausgestaltet sind, die jeweils von ihnen führbaren Seile mit gleicher Geschwindigkeit zu führen.

9. Vorrichtung gemäß Anspruch 8, weiter aufweisend: einen Einlaufabschnitt (11), an welchem das zumindest eine obere Seil (10-3) und das zumindest eine untere Seil (10-1, 10-2) einen Winkel bilden, der in einer vertikalen Ebene gegen die Transportrichtung (MD) geöffnet ist, derart, dass die Folie (100) zwischen die Seile (10-1, 10-3) einführbar ist, und
einen Auslaufabschnitt (19), an welchem das zumindest eine obere Seil (10-3) und das zumindest eine untere Seil (10-1, 10-2) einen Winkel bilden, der in einer vertikalen Ebene in der Transportrichtung (MD) geöffnet ist, derart, dass die Folie (100) von einer Klemmung zwischen den Seilen (10-1, 10-2, 10-3) befreibar ist.

10. Vorrichtung gemäß Anspruch 9, weiter aufweisend: einen Reckabschnitt (II), in welchem die linken Seile (10-1, 10-2, 10-3) und die rechten Seile (10-1, 10-2, 10-3) so geführt sind, dass sie in Transportrichtung (MD) in einem Winkel voneinander auseinanderlaufen, der in der Transportrichtung (MD) geöffnet ist, derart, dass die Folie (100) zwischen den Seilen (10-1, 10-2, 10-3) verstreckbar ist.

11. Vorrichtung gemäß Anspruch 9 oder 10, weiter aufweisend: ein Rollenelement (81) am Einlaufabschnitt (11), wobei das Rollenelement (81) verstellbar angeordnet ist, um die Einlaufbreite der Folie (100) einzustellen, und ein Rollenelement (82) am Auslaufabschnitt (19), wobei das Rollenelement (82) verstellbar angeordnet ist, um die Auslaufbreite der Folie (100) einzustellen.

12. Vorrichtung gemäß einem der Ansprüche 8 bis 11, wobei jede Basisstruktur (1) ausgestaltet ist, die Seile (10-1, 10-2, 10-3) in Querrichtung (TD) zur Transportrichtung (MD) und vertikal zur Transportrichtung (MD) zu fixieren, wobei jeweils Rollenelemente vorgesehen sind, welche zur Fixierung beitragen.

13. Verfahren zum Transport von Folie (100) in einer Transportrichtung (MD), insbesondere für eine Reckanlage, wobei das Verfahren in einer Vorrichtung gemäß einem der Ansprüche 8 bis 12 ausgeführt wird, wobei zumindest ein oberes sich bewegendes Seil (10-3) und zumindest ein unteres sich bewegendes Seil (10-1, 10-2) geführt werden, und
das zumindest eine obere geführte Seil und das zumindest eine untere geführte Seil (10-1, 10-2) die Folie (100) an deren Seitenrand zumindest stellenweise klemmen und mitnehmen,
wobei die Folie (100) zwischen das zumindest eine obere Seil (10-3) auf der oberen Folienfläche und das zumindest eine untere Seil (10-1, 10-2) auf der unteren Folienfläche geklemmt wird.

14. Verfahren gemäß dem vorherigen Anspruch, wobei die Folie (100) in Transportrichtung (MD) linksseitig und rechtsseitig geführt wird.

15. Verfahren gemäß einem der Ansprüche 13 bis 14, wobei die Seile durch Rollenelemente geführt werden.

16. Verfahren gemäß einem der Ansprüche 13 bis 15, welches in einer Vorrichtung gemäß einem der Ansprüche 8 bis 12 ausgeführt wird.

17. Verfahren gemäß einem der Ansprüche 13 bis 16, wobei die Folie (100) eines von polyolefinen Rohstoffen, Polyester, Polyamid, PLA, Polystyrenen, Polykarbonaten ist oder die Folie (100) ein teilkristalliner thermoplastischer Kunststoff ist.

## Claims

1. Base structure (1) for a device for transporting film (100) wherein the base structure (1) comprises:
at least one upper guide unit (60) and one lower guide unit (50), wherein the upper guide unit (60) is designed to guide at least one upper movable cable (10-3), and the lower guide unit (50) is designed to guide at least one lower movable cable (10-1, 10-2), wherein the at least one upper cable (10-3) and the at least one lower cable (10-1, 10-2) can be arranged so as to clamp the film (100) at least in places on the lateral edge thereof and to carry along said film, and wherein at least one guide unit (60) of the guide units (50, 60) is designed to press the film (100), by means of the at least one cable (10-3) guided by the guide unit (60), against the at least one cable (10-1, 10-2) guided by the other guide unit (50).

2. Base structure (1) according to claim 1, wherein each guide unit (50, 60) has a number of roller elements (20, 30, 40, 45) which are designed to guide the respective at least one cable (10-1, 10-2, 10-3).

3. Base structure (1) according to claim 2, wherein at least one roller element (20) of the number of roller elements (20) is arranged on the at least one lower guide unit (50), below the at least one cable (10- 1, 10-2) guided by the at least one lower guide unit (50), and wherein at least one roller element (30) of the number of roller elements (30) is arranged on the at least one upper guide unit (60), above the at least one cable (10-3) guided by the at least one upper guide unit (60).

4. Base structure (1) according to claim 3, wherein at least two roller elements (40) of the number of roller elements are arranged such that they clamp the at least one guided cable (10-1, 10-2, 10-3) between them.

5. Base structure (1) according to any of the preceding claims, wherein the clamping of the film (100) is brought about by mutually opposite roller elements (20, 30, 40) and the pressure thereof on the cables, which roller elements act on the cables (10-1, 10- 2, 10-3).

6. Base structure (1) according to any of the preceding claims, wherein the film (100) can be clamped between the at least one upper cable (10-3) on the upper film surface and the at least one lower cable (10-1, 10-2) on the lower film surface.

7. Base structure (1) according to any of the preceding claims, wherein the upper cable (10-3) has a different lay direction from the at least one lower cable (10-1, 10-2).

8. Device for transporting film (100) in a transport direction (MD), in particular for a stretching system, comprising:
at least two base structures (1) according to any of the preceding claims, wherein one base structure (1) is arranged on the right-hand side in the transport direction (MD), and another basic structure (1) is arranged on the left-hand side in the transport direction (MD), wherein the at least two base structures (1) are designed to guide the cables which can be guided thereby at the same speed.

9. Device according to claim 8, further comprising: an inlet portion (11) in which the at least one upper cable (10-3) and the at least one lower cable (10-1, 10-2) form an angle which, in a vertical plane, is open counter to the transport direction (MD) such that the film (100) can be inserted between the cables (10-1, 10-3); and an outlet portion (19) in which the at least one upper cable (10-3) and the at least one lower cable (10-1, 10-2) form an angle which, in a vertical plane, is open in the transport direction (MD) such that the film (100) can be freed from a clamping between the cables (10-1, 10-2, 10-3).

10. Device according to claim 9, further comprising: a stretch portion (II) in which the left-hand cables (10-1, 10-2, 10-3) and the right-hand cables (10-1, 10-2, 10-3) are guided such that said cables diverge from one another in the transport direction (MD) at an angle which is open in the transport direction (MD), such that the film (100) can be stretched between the cables (10-1, 10-2, 10-3).

11. Device according to either claim 9 or claim 10, further comprising: a roller element (81) at the inlet portion (11), wherein the roller element (81) is adjustably arranged in order to set the inlet width of the film (100); and a roller element (82) at the outlet portion (19), wherein the roller element (82) is arranged so as to be adjustable, in order to set the outlet width of the film (100).

12. Device according to any of claims 8 to 11, wherein each base structure (1) is designed to fix the cables (10-1, 10-2, 10-3) in the transverse direction (TD) with respect to the transport direction (MD), and vertically with respect to the transport direction (MD), wherein in each case roller elements are provided which contribute to said fixation.

13. Method for transporting film (100) in a transport direction (MD), in particular for a stretching system, the method being carried out in a device according to any of claims 8 to 12, wherein at least one upper moving cable (10-3) and at least one lower moving cable (10-1, 10-2) are guided, and the at least one upper guided cable and the at least one lower guided cable (10-1, 10-2) clamp the film (100) at least in places on the lateral edge thereof and carry along said film, wherein the film (100) is clamped between the at least one upper cable (10-3) on the upper film surface and the at least one lower cable (10-1, 10-2) on the lower film surface.

14. Method according to the preceding claim, wherein the film (100) is guided on the left-hand side and the right-hand side in the transport direction (MD).

15. Method according to any of claims 13 to 14, wherein the cables are guided by roller elements.

16. Method according to any of claims 13 to 15, which is carried out in a device according to any of claims 8 to 12.

17. Method according to any of claims 13 to 16, wherein the film (100) is one of polyolefin raw materials, polyester, polyamide, PLA, polystyrene, polycarbonates, or the film (100) is a partially crystalline thermoplastics material.

## Revendications

1. Structure de base (1) pour un dispositif de transport de feuille (100), la structure de base (1) présentant :
au moins une unité de guidage supérieure (60) et une unité de guidage inférieure (50), dans laquelle l'unité de guidage supérieure (60) est conçue pour guider au moins un câble mobile supérieur (10-3) et l'unité de guidage inférieure (50) est conçue pour guider au moins un câble mobile inférieur (10-1, 10-2), dans laquelle l'au moins un câble supérieur (10-3) et l'au moins un câble inférieur (10-1, 10-2) peuvent être disposés de manière à pouvoir serrer et entraîner la feuille (100) par son bord latéral au moins par endroits, et dans lequel au moins une unité de guidage (60) des unités de guidage (50, 60) est conçue pour presser la feuille (100) par l'intermédiaire de l'au moins un câble (10-3) guidé par l'unité de guidage (60) contre l'au moins un câble (10-1, 10-2) guidé par l'autre unité de guidage (50).

2. Structure de base (1) selon la revendication 1, dans laquelle chaque unité de guidage (50, 60) présente un certain nombre d'éléments à rouleaux (20, 30, 40, 45) conçus pour guider l'au moins un câble (10-1, 10-2, 10-3) respectif.

3. Structure de base (1) selon la revendication 2, dans laquelle au moins un élément à rouleaux (20) du nombre d'éléments à rouleaux (20) est disposé au niveau de l'au moins une unité de guidage inférieure (50) en dessous de l'au moins un câble (10-1, 10-2) guidé par l'au moins une unité de guidage inférieure (50), et dans laquelle l'au moins un élément à rouleaux (30) du nombre d'éléments à rouleaux (30) est disposé au niveau de l'au moins une unité de guidage supérieure (60) au-dessus de l'au moins un câble (10-3) guidé par l'au moins une unité de guidage supérieure (60).

4. Structure de base (1) selon la revendication 3, dans laquelle au moins deux éléments à rouleaux (40) du nombre d'éléments à rouleaux sont disposés de sorte à serrer entre eux l'au moins un câble (10-1, 10-2, 10-3) guidé.

5. Structure de base (1) selon l'une des revendications précédentes, dans laquelle le serrage de la feuille (100) est effectué par des éléments à rouleaux (20, 30, 40) opposés et leur pression sur les câbles agit sur les câbles (10-1, 10-2, 10-3).

6. Structure de base (1) selon l'une des revendications précédentes, dans laquelle la feuille (100) peut être serrée entre l'au moins un câble supérieur (10-3) sur la surface supérieure de la feuille et l'au moins un câble inférieur (10-1, 10-2) sur la surface inférieure de la feuille.

7. Structure de base (1) selon l'une des revendications précédentes, dans laquelle le câble supérieur (10-3) présente une direction de torsadage différente de celle de l'au moins un câble inférieur (10-1, 10-2).

8. Dispositif de transport de feuille (100) dans une direction de transport (MD), en particulier pour un dispositif d'étirage, présentant :
au moins deux structures de base (1) selon l'une des revendications précédentes, dans lequel une structure de base (1) est disposée à droite dans la direction de transport (MD) et l'autre structure de base (1) est disposée à gauche dans la direction de transport (MD), dans lequel les au moins deux structures de base (1) sont conçues pour guider les câbles, qui peuvent être guidés chacun par celles-ci, à la même vitesse.

9. Dispositif selon la revendication 8, présentant en outre : une section d'entrée (11) au niveau de laquelle l'au moins un câble supérieur (10-3) et l'au moins un câble inférieur (10-1, 10-2) forment un angle ouvert dans un plan vertical à l'encontre de la direction de transport (MD), de sorte que la feuille (100) puisse être insérée entre les câbles (10-1, 10-3), et une section de sortie (19) au niveau de laquelle l'au moins un câble supérieur (10-3) et l'au moins un câble inférieur (10-1, 10-2) forment un angle ouvert dans un plan vertical dans la direction de transport (MD), de sorte que la feuille (100) puisse être libérée du serrage entre les câbles (10-1, 10-2, 10-3).

10. Dispositif selon la revendication 9, comportant en outre : une section d'étirement (II) dans laquelle les câbles de gauche (10-1, 10-2, 10-3) et les câbles de droite (10-1, 10-2, 10-3) sont guidés de telle sorte qu'ils divergent les uns des autres dans la direction de transport (MD) à un angle qui est ouvert dans la direction de transport (MD), de sorte que la feuille (100) puisse être étirée entre les câbles (10-1, 10-2, 10-3).

11. Dispositif selon la revendication 9 ou 10, comportant en outre : un élément à rouleau (81) au niveau de la section d'entrée (11), dans lequel l'élément à rouleau (81) est disposé de manière réglable pour régler la largeur d'entrée de la feuille (100), et un élément à rouleau (82) au niveau de la section de sortie (19), dans lequel l'élément à rouleau (82) est disposé de manière réglable pour régler la largeur de sortie de la feuille (100).

12. Dispositif selon l'une des revendications 8 à 11, dans lequel chaque structure de base (1) est conçue pour fixer les câbles (10-1, 10-2, 10-3) dans la direction transversale (TD) par rapport à la direction de transport (MD) et verticalement à la direction de transport (MD), dans lequel des éléments à rouleaux sont respectivement prévus, lesquels éléments à rouleaux contribuent à la fixation.

13. Procédé de transport de feuille (100) dans une direction de transport (MD), en particulier pour un dispositif d'étirage, le procédé étant exécuté dans un dispositif selon l'une des revendications 8 à 12, dans lequel au moins un câble mobile supérieur (10-3) et au moins un câble mobile inférieur (10-1, 10-2) sont guidées, et l'au moins un câble guidé supérieur et l'au moins un câble guidé inférieur (10-1, 10-2) serrent et entraînent la feuille (100) par son bord latéral au moins par endroits, dans lequel la feuille (100) est serrée entre l'au moins un câble supérieur (10-3) sur la surface supérieure de la feuille et l'au moins un câble inférieur (10-1, 10-2) sur la surface inférieure de la feuille.

14. Procédé selon la revendication précédente, dans lequel la feuille (100) est guidée sur les côtés gauche et droit dans la direction de transport (MD).

15. Procédé selon l'une des revendications 13 à 14, dans lequel les câbles sont guidés par des éléments à rouleaux.

16. Procédé selon l'une des revendications 13 à 15, qui est réalisé dans un dispositif selon l'une des revendications 8 à 12.

17. Procédé selon l'une des revendications 13 à 16, dans lequel la feuille (100) est l'une des matières premières polyoléfines, du polyester, du polyamide, du PLA, des polystyrènes, des polycarbonates ou la feuille (100) est un thermoplastique semi-cristallin.
